# EUROPEAN PATENT APPLICATION

(11) **EP 3 672 121 A1**
(43) Date of publication of application: **24.06.2020**
(21) Application number: 18215505.1
(22) Date of filing: 21.12.2018
(51) Int. Cl.: H04J 14/02, H04J 3/16

(54) **MESSAGE ENCODING PARAMETER RECONFIGURATION IN AN OPTICAL NETWORK**

(71) Applicant: Xieon Networks S.à r.l., 2536 Luxembourg (LU)
(72) Inventor: Moreira, Henrique, 2650-187 Amadora (PT); Milev, Mladen, 2675-413 Odivelas (PT)
(74) Representative: Kretschmann, Dennis

(57) **Abstract**

A method for reconfiguring a message encoding parameter used by a first channel node to transmit information to a second channel node via a first optical channel in an optical network comprises the steps of sending, via a second optical channel of the optical network, a reconfiguration request with a message encoding parameter from the first channel node to the second channel node of the first optical channel; receiving, via the second optical channel, a reply to the reconfiguration request from the second channel node; and modifying the first channel node in accordance with the message encoding parameter used to transmit information from the first channel node to the second channel node based on the reply.

## Description

### FIELD OF THE INVENTION

The present invention is in the field of optical networks. More precisely, the present invention relates to message encoding in frequency multiplexed optical networks.

### BACKGROUND

Optical networks provide high bandwidth for information transfer through optical fibers connecting spatially separated optical nodes. The information is encoded by modulating the properties of an optical beam in a first optical node which is then transmitted through a sequence of optical fibers to a second node. In principle, a plurality of optical beam modulation schemes are available and information can be encoded by modulating any combination of the phase, amplitude, frequency, and polarization of the optical beam.

As an optical fiber can further support a plurality of optical frequencies. A plurality of optical channels can also be accommodated in each optical fiber connection, wherein each optical channel can be associated with one or more bands of optical frequencies supported by the optical fiber or can be accommodated in a respective timeslot in one or more bands of optical frequencies. Wavelength dependent beam splitters in the optical network can define the connection between optical channel nodes through an interconnected fiber network by selectively branching off signals in a certain frequency band to form an optical transport network (OTN). Nodes located on vertices of the fiber network can amplify, retransmit or forward the optical signal propagating through a given optical channel. An optical channel for transmission of information between two distant channel nodes can then be considered as the topological connection of the two channel nodes through the optical fiber network associated with a certain band of frequencies.

Despite the refined optical properties of state-of-the-art optical fibers, the signal transmitted via an optical channel is still subject to a plurality of signal degrading effects, ranging from several dispersion sources during propagation through the fiber to amplifier noise of intermediate nodes. To address these adverse side-effects during signal transmission, the transmitted information is accompanied by partially redundant information to perform forward error correction (FEC) of a limited number of signal bytes. Moreover, during deployment of an optical network, the impact of signal degrading effects for different modulation schemes is estimated and a cost efficient solution for transmitter and receiver hardware at the optical nodes is prepared to provide a certain end-of-life (EOL) performance, relating to signal rate, bit error rate, etc., using an optimum modulation scheme for the fiber, matching transponder hardware and corresponding ancillary hardware for further signal routing.

When a new optical channel is provided between optical channel nodes of the optical network, a topological connection between the signal nodes is initiated by a transport network management system (NMS) imposing a corresponding optical switch configuration linking the two nodes via a set of optical fibers of the optical network, and all intermediate nodes are configured and/or reconfigured to support the optical channel defined in this way for a given set of channel parameters including modulation schemes as well as FEC mode and data rate.

### SUMMARY OF THE INVENTION

The known methods and corresponding devices however are associated with long reconfiguration times and a significant synchronization effort. In particular, the configuration and/or reconfiguration steps performed in the art generally imply centralized reconfiguration of all intermediate nodes. Moreover, state-of-the-art transport management systems actively restrict any modification of encoding parameters in active optical channels and rather require termination of the optical channel to prevent inadvertent synchronization loss due to reconfiguration of individual nodes.

In view of this state-of-the-art, the object of the invention is to provide a way to configure and/or reconfigure an optical channel of an optical network resulting in a reduced channel downtime and/or a reduced synchronization effort.

This object is solved by methods for reconfiguring a message encoding parameter and optical channel nodes according to the independent claims. The dependent claims relate to preferred embodiments.

According to a first aspect, the invention relates to a method for reconfiguring a message encoding parameter used by a first channel node to transmit information to a second channel node via a first optical channel in an optical network. The method comprises the steps of sending, via a second optical channel of the optical network, a reconfiguration request with a message encoding parameter for the first optical channel from the first channel node to the second channel node; receiving, via the second optical channel, a reply to the reconfiguration request from the second channel node; and modifying the first channel node in accordance with the message encoding parameter used to transmit information from the first channel node to the second channel node via the first optical channel based on the reply.

The inventors have recognized that a modification of message encoding parameters in current optical networks, wherein passive optical amplifiers, such as erbium doped fiber amplifiers, are used at the intermediate optical nodes of the optical channel, may be performed solely in the end nodes of said optical channel. Thus, a change of said message encoding parameters may solely involve two nodes of an optical channel while the optical beam may remain switched on to limit transient effects, such as an influence of a power-dependent dynamic modification of the optical properties of the optical fiber. Moreover, the message encoding parameter may then be negotiated by the end nodes via bidirectional signaling and in particular substantially independent from a NMS.

In accordance with the often modular nature of an OTN, the first channel node and/or the second channel node may also be intermediate nodes of a larger network. The term end node should therefore not be construed as limiting the first channel node and the second channel node to end nodes of an optical network but is considered to include end nodes of intermediate optical channels of such an optical network and can also be embodied by an (intermediate) termination of an optical messaging pathway of said network, e.g. the first optical channel, which is adapted for information (re-)transmission via an optical channel.

In a preferred embodiment, the message encoding parameter comprises at least one of a data rate, an FEC mode, a modulation mode and a baud rate.

The message encoding parameters are substantially unaffected by the passive amplification of intermediate channel nodes in an OTN, thereby enabling end node driven message encoding parameter reconfiguration.

The new message encoding parameter could be derived by the first optical node, such as in the case of a hardware compatibility of the first node for said message encoding parameter estimated to be associated with improved channel transmission. However, in some embodiments, a network client or management system issues a reconfiguration of a node, and the method may then comprise receiving a new message encoding parameter for the first optical channel. The new message encoding parameter may be motivated by a recorded or recognized hardware capability at the first node and/or a modified end-of-life requirement and/or an initial configuration error.

For example, the new message encoding parameter may specify a new FEC scheme, a different modulation configuration, such as a different quantization of a quadrature amplitude modulation (QAM) or pulse amplitude modulation (PAM) format, or may specify a combination of message encoding parameters, such as different baud rate and modulation format to communicate the same data rate with a different signal to noise ratio (SNR).

In a preferred embodiment, the information is transmitted from the first channel node to the second channel node through at least one additional node along the optical network.

The intermediate at least one additional node should be configured to passively amplify the first optical channel to enable a reconfiguration of message encoding parameters by the first and second channel nodes independently of the intermediate at least one additional node in the optical transport network. The reconfiguration of the message encoding parameter for the first channel should be performed without decommissioning said intermediate at least one additional channel node and in particular without decommissioning any intermediate nodes in the first optical channel.

In a preferred embodiment, the optical network employs wavelength multiplexing.

Thus, a plurality of optical channels can be supported by the same fiber and the second optical channel may in principle be supported by the same physical optical fiber. In some embodiments, the optical network is a dense wavelength division multiplexing network (DWDM).

To avoid messaging as well as synchronization overhead between an external management system and the nodes, the method considers the use of a second optical channel provided in the optical network between the nodes. The second optical channel may be different from the first channel, and in particular should be spatially and/or spectrally separated from the first optical channel. According to an example, the second optical channel may be associated with a different optical frequency/wavelength than the first optical channel. In this way, the first and second channel nodes can negotiate the reconfiguration using the infrastructure of the OTN via the second optical channel while the message encoding parameter of the first optical channel is modified.

In a preferred embodiment, the second optical channel is an optical supervisory channel of the optical network, or the second optical channel is implemented in an overhead data field of an optical channel having a different message encoding scheme than the first optical channel, in particular in an overhead field reserved for operator use.

Hence, in some embodiments, the second channel is implemented in an optical channel which is terminated at intermediate nodes of the optical channel and not amplified by passive amplifiers. As an example, the optical supervisory channel (OSC) is usually implemented at a wavelength distant from the band of wavelengths used for payload transport (usually around 1550 nm), such as 1510 nm, 1620 nm, 1310 nm, or the like, and may be only weakly amplified by the passive amplifiers of the OTN. Each of the optical channel nodes may thus listen and populate the OSC with configuration/service information, and the reconfiguration of the first and second channel nodes can thus be negotiated via the OSC.

If no OSC is supported by the optical channel and/or the first and second nodes are connected via two payload-carrying optical channels, the second optical channel may also be implemented in a second independent payload-carrying optical channel having an independent message encoding scheme, such as an independent optical channel implemented in a different band of frequencies. In this case, an overhead field in a data frame transported via the second payload-carrying channel can be used for negotiation of message encoding parameter reconfiguration between the first and second channel nodes. For example, the overhead field may be a trail trace identifier field (TTI) and the first and second channel nodes may in particular use bytes 32 to 63 (commonly reserved for operator use in OTN networks) or 48 to 63 to negotiate a change of message encoding parameters.

In a preferred embodiment, the method further comprises abandoning reconfiguring of the first optical channel if the second channel node cannot execute and complete and/or rejects the reconfiguration request.

An operator, a NMS or the first channel node may not be aware of the compatibility of the second channel node with the new message encoding parameter, such as in an open platform architecture OTN. Thus, the reply to the reconfiguration request by the second channel node preferably indicates a compatibility of the second channel node and the reconfiguration should only be executed if the reply indicates compatibility with the new message encoding parameter.

In a preferred embodiment, the method further comprises the steps of sending, via the second optical channel, an error suppression message instructing the second channel node to suppress errors from frame loss during a subsequent change of the message encoding parameter, and sending a transmitter reconfiguration completion message to the second channel node when the message encoding parameter has been successfully changed.

Once the first channel nodes is modified according to the message encoding parameter, such as by modifying a transponder configuration of the first channel node to conform with the message encoding parameter, the first optical channel can become temporarily unavailable for payload transfer, as the second channel node may temporarily not be compatible with the modified message encoding format. Thus, the transponder hardware of the second channel node may detect and report loss of frame errors. However, since the source of the temporary increased proneness for errors is the ongoing reconfiguration of the first channel node, the second channel node can suppress generation of errors originating from unsuccessful message decoding synchronously with sending the reply to the reconfiguration request to the first channel node.

In a preferred embodiment, the method further comprises the steps of receiving, via the second optical channel, a receiver reconfiguration completion message from the second channel node, and reinitiating payload transfer via the first optical channel.

Preferably, the first channel node holds payload transfer until the second channel node has completed a receiver reconfiguration to be compatible with the modified message encoding parameter. In principle messaging via an optical channel is bidirectional although the transmitter and receiver hardware configuration is usually unidirectional. However, advantageously, both the receiver and transmitter configuration of the first and second channel nodes are modified during the reconfiguration, such that the receiver reconfiguration message may also indicate completion of transmitter hardware configuration in the second channel node. The first channel node may then begin transferring payload to the second channel node. In some embodiments, the first channel node sends a test frame to the second channel node for confirming a successful message encoding parameter reconfiguration in the second channel node and waits for a reply by the second channel node indicating a successful decoding of the test data frame via the first or second optical channel before reinitiating payload transfer.

In some embodiments, the method further comprises sending a reconfiguration completion message to the second channel node via the second optical channel to inform the second channel node of a successful completion of the reconfiguration in the first channel node and/or to request reconfiguration of the message encoding parameter in the second channel node, which is used to receive payload via the first optical channel. Thus, in some embodiments, reconfiguration of the first channel node and the second channel node may be performed in sequence.

In a preferred embodiment, the first channel node is selected as a master of the first optical channel between the first channel node and the second channel node based on an unambiguous rule, said unambiguous rule preferably depending on the identifiers of the first channel node and second channel node in the optical network.

In principle, any one of the first and second channel nodes could initiate the reconfiguration of the message encoding parameter of the first optical channel. However, to avoid concurrent reconfiguration requests by the first and second channel nodes, an unambiguous rule preferably designates a master-slave configuration between the first and second channel nodes. In principle, the identifiers of the first and second channel nodes in the optical network could be mapped to a numerical identifier, and the designation of the master of the first optical channel could be made depending on a comparison of the numerical identifiers of the first and second channel nodes, such as by determining the greater or smaller numerical identifier between the first and second channel nodes. In some embodiments, if the second channel node receives a request for message encoding parameter reconfiguration, the second channel node informs the first channel node of the message encoding parameter reconfiguration request and designates the first channel node as the master of the first optical channel.

In a preferred embodiment, the method further comprises verifying compatibility of the first channel node with the message encoding parameter after receiving the message encoding parameter and before sending the reconfiguration request.

The request for the new message encoding parameter may be issued by a client or a NMS of the optical network which may be unaware of a compatibility of the first channel node with the new message encoding parameter. Thus, the first channel node should only initiate reconfiguration if the new message encoding parameter is supported by the first channel node.

In a preferred embodiment, the reconfiguration request comprises a set of supported parameter values for the message encoding parameter.

The method may further comprise receiving a selected parameter value from the second channel node, and modifying the first channel node in accordance with the selected parameter value. In some embodiments, the method comprises extracting the selected parameter value from the reply to the reconfiguration request from the second channel node.

The set of supported parameter values may be supported parameter values for the message encoding parameter which are supported by the first channel node. The parameter values can be arranged according to an order, wherein said order may indicate a preference of the first channel node for configuration with the supported parameter value. The second channel node can receive the set of supported parameter values for the message encoding parameter and may therefrom select a suitable message encoding parameter value supported by the second channel node. The second channel node may select the suitable message encoding parameter value according to an order and/or ranking of parameter values in the set of parameter values.

The second channel node can reply to the first optical channel node with the selected parameter value or reject the reconfiguration request if no parameter value of the set of parameter values is supported by the second channel node and/or can be set with success. The confirmation message/reply should then contain the selected parameter value, so that the first optical channel node can be configured with the same parameter value. This can improve a selection of an optimum parameter value based on a different hardware configuration for both channel nodes and can reduce the need for several message exchanges and a number of (re-)configuration requests between the first and second channel nodes. The improved selection of the parameter value for the message encoding parameter may further reduce a downtime of the optical link.

In some embodiments, the supported parameter values relate to combinations of parameter values for different message encoding parameters, e.g. combinations of parameters for the modulation mode and the baud rate. In this way, the second channel node may select a combination of parameter values as the selected parameter values, such as for selecting a combination of message encoding parameters for providing a given data rate in the first optical channel, which are supported by the second channel node.

According to a second aspect, the invention relates to a method for reconfiguring a message encoding parameter used by an optical channel node to transmit information to a master channel node via a first optical channel in an optical network, the method comprising the steps of receiving a reconfiguration request with a message encoding parameter for the first optical channel from the master channel node, via a second optical channel of the optical network; verifying compatibility of the optical channel node with the message encoding parameter, and if the optical channel node is compatible with the message encoding parameter suppressing raising an alarm for the first optical channel; sending, via the second optical channel to the master channel node, a reply to the reconfiguration request; and modifying the message encoding parameter used to receive information from the master channel node.

In accordance with the first aspect, the master channel node may be the first channel node and the optical channel node may be the second channel node. Additionally, the first channel node described in the context of the method of the first aspect may execute or implement the method according to the second aspect if the first channel node receives a reconfiguration request or is designated as a slave by said unambiguous rule.

The optical channel node acts as the slave of the first optical channel and receives the reconfiguration request by the master channel node. Once compatibility with the message encoding parameter is confirmed by the optical channel node, the optical channel node may suppress raising alarms for the first optical channel and may confirm reconfiguration with the new message encoding parameter to the master channel node.

In some embodiments, the method comprises suppressing an alarm resulting from unsuccessful decoding of signals transmitted via the first optical channel, such as an alarm issued by an optical transponder of the optical channel node. For example, the alarm may be a traffic loss alarm, e.g. a loss of frame (LOF) alarm.

In some embodiments, during suppressing raising an alarm, the method comprises issuing an error message to a client layer coupled to said first optical channel, said error message indicating temporary unavailability of the first optical channel for payload data transfer due to an active reconfiguration of message encoding parameters.

Thus, the method may be integrated in existing OTNs without creating additional messaging in the optical network due to erroneously issued alarms originating from an expected temporary unavailability of the first optical channel for payload transfer.

In some embodiments, the optical channel node initiates reconfiguration of the transponder used to receive information via the first optical channel subsequent to sending the reply to the reconfiguration request. Thus, a downtime of the first optical channel may be minimized.

However, in some embodiments, the optical channel node receives a transmitter reconfiguration completion message from the master channel node via the second optical channel before initiating reconfiguration of the second channel node according to the message encoding parameter, such that reconfiguration of the master channel node and the optical channel node can be at least partially temporarily independent, such as to limit an impact of reconfiguration failures in the master channel node and to facilitate rollback to the initial message encoding parameters for the first optical channel.

In a preferred embodiment, the reconfiguration request comprises a set of supported parameter values for the message encoding parameter and the method further comprises selecting a suitable parameter value from the set of supported parameter values as a selected parameter value, wherein the suitable parameter value is supported by the optical channel node.

In some embodiments, the reply to the reconfiguration request comprises the selected parameter value.

The optical channel node may select a suitable message encoding parameter value supported by the optical channel node based on a hardware capability of the optical channel node or components thereof. The optical channel node may give preference to parameter values according to the order of parameter values in the set of parameter values. For example, the optical channel node may iteratively check compatibility with a parameter value in the set of supported parameter values according to said order and may select the first encountered suitable parameter value from the set.

In case no parameter value of the set of parameter values is supported by the optical channel node and/or can be set with success, the optical channel node should reject the reconfiguration request or reply with a different set of parameter values which are supported by the second node. On the other hand, if at least one of the parameter values is supported by the second channel node, the selected parameter value may be notified to the master channel node and the configuration of the optical channel node may be modified according to the selected parameter value. However, in some embodiments, the optical channel node may send a message containing all of the at least one suitable parameter values which are supported by the optical channel node to the master channel node, e.g. in an embodiment where an order of the set of supported parameter values does not indicate a preference of the master channel node, although further messaging for negotiating the parameter value for the message encoding parameter may then be required.

According to a third aspect, the invention relates to an optical channel node of an optical network configured to transmit information to a second channel node via a first optical channel in the optical network. The optical channel node is configured to send, via a second optical channel of the optical network, a reconfiguration request with a message encoding parameter for the first optical channel to the second channel node of the first optical channel; receive, via the second optical channel, a reply to the reconfiguration request from the second channel node; and modify the configuration of the optical channel out in accordance with the message encoding parameter used to transmit information from the optical channel node to the second channel node via the first optical channel based on the reply.

In preferred embodiments, the optical channel node according to the third aspect implements or executes any one of the embodiments of the method according to the first aspect.

In some embodiments, the optical channel node is configured to receive a new message encoding parameter for the first optical channel before sending the reconfiguration request to the second channel node.

In a preferred embodiment, the optical channel node further comprises a transponder for modulating an optical beam of the first optical channel with the message encoding parameter to transmit information from the optical channel node to the second channel node, and a switch to receive the optical beam from the transponder and direct the optical beam into an optical fiber for the first optical channel. The control unit is configured to modify the transponder in accordance with the message encoding parameter.

In a preferred embodiment, the optical beam remains switched on while the control unit changes an encoding parameter at the transponder.

Leaving the optical beam switched on during the reconfiguration of the first optical channel allows limiting transient effects on power-dependent optical properties of the optical fiber supporting the first optical channel, thereby facilitating resynchronization by the first and second channel nodes following message encoding parameter reconfiguration.

In a preferred embodiment, the reconfiguration request comprises a set of supported parameter values for the message encoding parameter.

In preferred embodiments, the optical channel node is further configured to receive a selected parameter value from the second channel node, and to modify the first channel node in accordance with the selected parameter value.

In some embodiments, the optical channel node is further configured to extract the selected parameter value from the reply to the reconfiguration request from the second channel node.

According to a fourth aspect, the invention relates to an optical channel node of an optical network configured to receive information from a master channel node via a first optical channel in the optical network. The optical channel node is configured to receive a reconfiguration request with a new message encoding parameter for the first optical channel from the master channel node, via a second optical channel of the optical network; verify compatibility of the optical channel node with the new message encoding parameter. If the optical channel node is compatible with the new message encoding parameter, the optical channel node is configured to suppress raising an alarm for the first optical channel; send, via the second optical channel to the master channel node, a reply to the reconfiguration request; and modify the message encoding parameter used to receive information from the master channel node.

In preferred embodiments, the optical channel node according to the fourth aspect implements and/or executes the method according to the second aspect and/or provides the functionality of the second channel node described in the context of the method according to the first aspect.

In a preferred embodiment, the control unit is configured to modify the message encoding parameter used to receive information from the master channel node after receiving an error suppression clearing message via the second optical channel.

The error suppression clearing message may indicate successful reconfiguration completion in the master channel node, such that payload data and/or test frames may now be transmitted via the first optical channel by the master channel node in accordance with the new message encoding parameter.

In a preferred embodiment, the reconfiguration request comprises a set of supported parameter values for the message encoding parameter, and the optical channel node is further configured to select a suitable parameter value from the set of supported parameter values as a selected parameter value, wherein the reply to the reconfiguration request in particular comprises the selected parameter value.

According to a fifth aspect, the invention relates to an optical channel node or system of channel nodes configured to implement the functionality of the optical channel node according to the third aspect and the functionality of the optical channel node according to the fourth aspect.

In other words, the invention may relate to a system of two channel nodes according to the first and second aspect, respectively, or to a single optical channel node implementing the functionality of the first channel node according to the third aspect or the optical channel node according to the fourth aspect depending on whether the single optical channel node is designated as a master or a slave by an unambiguous rule and/or by receiving a modified messaging encoding parameter via a third node, such as a further optical channel node, a client, or a NMS.

According to a sixth aspect, the invention relates to a computer program or computer program product comprising computer readable instructions, which when executed on an optical channel node, cause the optical channel node to implement the methods of the first and/or second aspect, and/or to configure the optical channel node as one or more optical channel nodes according to the third, fourth and/or fifth aspect.

### DETAILED DESCRIPTION OF EMBODIMENTS

The features and numerous advantages of the method and optical channel nodes according to the present invention will best be understood from a detailed description of preferred embodiments with reference to the accompanying drawings, in which:
- Fig. 1: shows a schematic optical transport system according to an example;
- Fig. 2: schematically illustrates a dense wavelength division multiplexing (DWDM) system according to an example;
- Fig. 3: shows a method for modifying a message encoding parameter used in a first optical channel according to an example;
- Fig. 4: illustrates a method for reconfiguring a message encoding parameter used by a first channel node to communicate via a first optical channel according to an example;
- Fig. 5: illustrates a method for reconfiguring a message encoding parameter used by a second channel node to receive messages via a first optical channel according to an example; and
- Fig. 6: illustrates a method for abandoning a reconfiguration of the message encoding parameter according to an example.

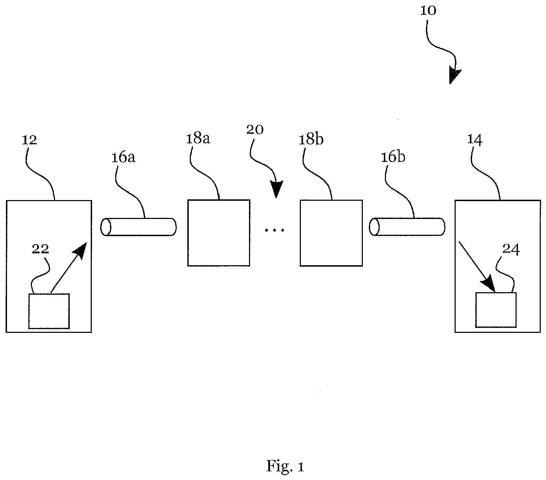

Fig. 1 shows a schematic optical transport system 10 according to an example. The system 10 comprises a first channel node 12 and a second channel node 14 coupled via optical fibers 16a, 16b to intermediate optical channel nodes 18a, 18b of an intermediate transport section 16a, 16b, 20 connecting the first channel node 12 and the second channel node 14. The first channel node 12 comprises a first transponder 22 and the second channel node 14 comprises a second transponder 24, wherein the first transponder 22 is configured to modulate an optical beam accommodated in a band of wavelengths and added into the first optical fiber 16a. The second transponder 24 is configured to receive said optical beam at said band of wavelengths after it is dropped from the second optical fiber 16b at the second channel node 14.

The optical beam at said band of wavelengths added by the first channel node 12 to the optical beam traversing the optical fibers 16a, 16b and the intermediate transport section 16a, 16b, 20 comprising intermediate optical channel nodes 18a, 18b defines an optical channel between the first and second channel nodes 12, 14 for transferring payload data from the first channel node 12 to the second channel node 14. The first transponder 22 encodes the payload data in the optical beam with a given modulation format, such as quadrature amplitude modulation, pulse amplitude modulation, or the like, and using a given forward error correction (FEC) mode with a modulation frequency given by a predefined baud rate. Since each symbol encoded at the modulation frequency can encode a plurality of bits depending on the modulation format, an effectively transferred data rate for the optical channel can depend on both the baud rate and the modulation format.

A given data packet transferred from the first channel node 12 to the second channel node 14 is transferred in one or more data frames encapsulating the data packet together with overhead data providing service information as well as partially redundant data for forward error correction of transmission errors inadvertently modifying the symbols encoding the data packet. The FEC mode can specify a degree of redundancy in the data frame as well as the encoding format for providing the redundant data for forward error correction. Accordingly, the second channel node 14 receives, at the second transponder 24, the optical beam dropped from the second optical fiber 16b and decodes the data frame according to a predetermined message encoding parameter and potentially corrects transmission errors occurring during the transfer from the first channel node 12 to the second channel node 14.

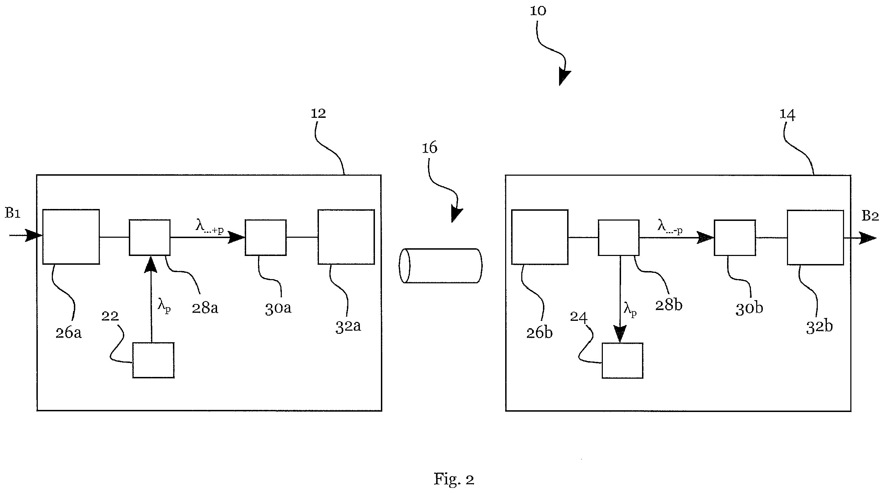

Fig. 2 schematically illustrates a dense wavelength division multiplexing (DWDM) system 10 according to an example to illustrate an exemplary network element configuration for the first and second channel nodes 12, 14. The system 10 comprises a first channel node 12 and a second channel node 14 connected via the optical fiber connection 16 to provide an optical channel accommodated in a predefined frequency band depicted as wavelength λₚ (i.e. a band of wavelengths), such as a DWDM band of the C-band between 191.7 THz to 196.1 THz or an extended C-band between 186 THz to 201 THz having a bandwidth of 100 GHz, 50 GHz or 25 GHz. Although not explicitly shown in Fig. 2 (but schematically shown in Fig. 1), said optical fiber connection 16 generally includes a plurality of intermediate passive (erbium doped fiber) amplifiers as well as intermediate channel nodes 16a, 16b configured to forward and/or passively amplify an optical beam traversing the optical fiber connection 16.

The first channel node 12 receives an optical input beam B1 from a DWDM network, which is amplified by a preamplifier 26a of the first channel node 12 and guided towards a first optical multiplexing section 28a allowing to add/drop a wavelength λₚ to/from the optical beam B1. A first transponder 22 of the first channel node 12 is configured to receive a client layer data signal and to encode the client layer data signal according to a set of message encoding parameters for the first transponder 22 specifying, among other parameters, an FEC mode, a modulation format and/or a baud rate for modulating the wavelength λₚ. The wavelength λₚ accommodating the first optical channel is received by the first multiplexer section 28a of the first channel node 12 and added to the DWDM network, such as by switching said wavelength λₚ to the DWDM network using a wavelength selective switch. The optical beam λ_{...+p} including the added first optical channel is then guided past an optional second multiplexing section 30a of the first channel node 12 to a post-amplifier 32a of the first channel node 12 to amplify the optical beam and insert the optical beam into the optical fiber connection 16.

The optical beam λ_{...+p} including the added first optical channel can be received by the second channel node 14 and preamplified at the second preamplifier 26b of the second channel node 14. A first multiplexing section 28 to be of the second channel node 14 can deterministically switch/drop the wavelength λₚ accommodating the first optical channel from the optical beam towards the second transponder 24 of the second channel node 14 while the optical beam λ_{...-p} from which the wavelength λₚ accommodating the first optical channel has been dropped can be switched towards the second multiplexing section 30b of the second channel node 14 and further guided to a post-amplifier 32b of the second channel node 14 which amplifies the optical beam for transmission as an outgoing beam B2 of the DWDM network.

In an initial configuration, the second transponder 24 receives the wavelength λₚ accommodating the first optical channel and decodes data frames according to the message encoding parameter, wherein the second transponder 24 is configured to sample the wavelength λₚ accommodating the first optical channel at a predefined baud rate and using a predefined modulation format as well as FEC mode shared with the first transponder 22 of the first channel node 12.

Although only a single wavelength λₚ is illustrated, the first and second channel nodes 12, 14 may communicate via a plurality of optical channels accommodated in a number of different wavelengths λₚ and one optical channel may comprise a plurality of bands of wavelengths and/or may be accommodated in a set of timeslots of said plurality of bands of wavelengths. However, for the sake of conciseness, the first and second optical channel will be referred to as corresponding to a respective different band of wavelengths. Nonetheless, in some embodiments, the first and second channel may equally share a frequency band and be accommodated in different timeslots of said shared frequency band without loss of generality.

In addition, the first and second channel nodes 12, 14 can listen to an additional frequency band outside of the C-band, such as an optical supervisory channel (OSC), which can be transmitted via the same physical optical fibers 16, 16a, 16b. The additional frequency band may be terminated and re-transmitted at intermediate nodes 16a, 16b, wherein each of the intermediate nodes 16a, 16b may add service-level information to the additional frequency band.

In addition, a second (symmetric) unidirectional optical service may be provided connecting the second channel node 14 and the first channel node 12 in the reverse direction. However, for the sake of simplicity, the optical channels supported by the optical network will be discussed as being bidirectional and the reverse connection between the second channel node 14 and the first channel node 12 is supposed to be implicitly provided. The skilled person will nonetheless appreciate that the reverse connection between the second channel node 14 and the first channel node 12 may be independently configured from the first optical channel and messages transferred via the reverse optical connection may be encoded according to different message encoding parameters.

In the prior art, the shared message encoding parameters shared between the first channel node 12 and the second channel node 14 are usually configured during commissioning of the first optical channel. Reconfiguration of the message encoding parameters shared by the first channel node 12 and the second channel 14 is possible by decommissioning the first optical channel including intermediate channel nodes 16a, 16b along the optical fiber connection 16 and then recommissioning the first optical channel with the modified message encoding parameters.

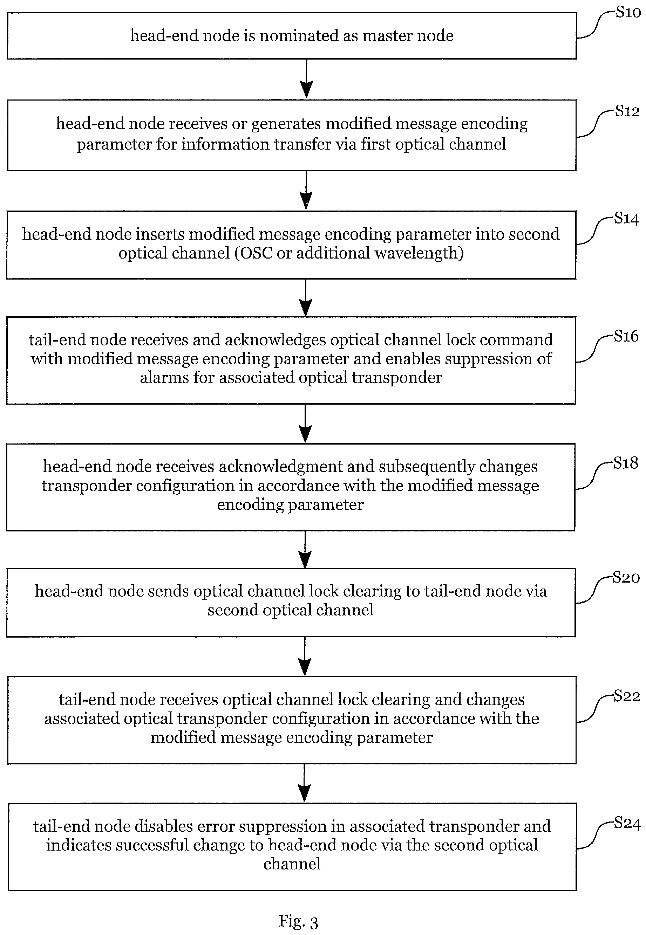

In contrast, using the techniques of the present disclosure, the first, head-end channel node 12, and the second, tail-end channel node 14 may also negotiate modified message encoding parameters avoiding decommissioning of the first optical channel, for instance by means of the method illustrated in Fig. 3.

Fig. 3 shows a sequence of method steps for modifying a message encoding parameter used for encoding a message in the first optical channel between a first, head-end node 12 and a second, tail-end node 14 following a request for modified message encoding parameters, such as by a management system for the optical transport network, according to an example. The method begins by nominating the first channel node 12 as a master node for the first optical channel (step S10). Said nominating may be performed according to an unambiguous rule, such as a comparison of alphabetical to decimal value conversion of the trail trace identifier portion identifying the network elements, e.g. the source/destination access point identifier (SAPI/DAPI) of the end nodes 12, 14 of the first optical channel. However, since optical channel nodes 12, 14 are, despite the general unidirectionality of optical connections, generally bi-directionally connected, one of the optical channel nodes 12, 14 of an optical connection may also assume the designation as master node 12 and may consequently inform the other optical channel node 14 of said assumed designation as head-end node 12, i.e. as first channel node 12, for the first optical channel connecting it to the other, tail-end node 14, i.e. the second channel node 14.

In a next step S12, which may however equally precede step S10, the first channel node 12 receives or generates modified message encoding parameters for transferring data frames via the first optical channel to the second channel node 14. In preferred examples, the first channel node 12 receives the message encoding parameter from a management node of the optical network. In step S14, the first channel node 12 inserts the modified message encoding parameter into the second optical channel, wherein said second optical channel features independent message encoding parameters from the first channel, such as a second optical channel in a different band of wavelengths transmitted via the optical fiber connection 16 to the second channel node 14 or a wavelength/band of wavelengths lying outside of the passively amplified band of wavelengths, such as the OSC which can be terminated and retransmitted at intermediate nodes 16a, 16b of the optical fiber connection 16.

In step S16, the second channel node 14 receives the modified message encoding parameters transmitted via the second optical channel from the first channel node 12 and verifies a compatibility of the second transponder 24 of the second channel node 14 with said modified message encoding parameters. If the modified message encoding parameters are supported by the second channel node 14, the second channel node 14 acknowledges the reconfiguration request by the first channel node 12 via the second optical channel 14 and enables the suppression of alarms for the second optical transponder 24 resulting from unsuccessful decoding of signals transmitted by the first optical channel during the reconfiguration of the message encoding parameters by the first and second channel nodes 12, 14.

The first channel node 12 receives the acknowledgment of the second channel node 14 via the second optical channel in step S18 and subsequently changes the configuration of the first transponder 22 in accordance with the modified message encoding parameter.

When the first channel node 12 finishes reconfiguration of the first transponder 22 and associated hardware, it sends a channel lock clearing message to the second channel nodes 14 via the second optical channel (step S20), indicating the successful change of the message encoding parameter to the second channel node 14 and the readiness to recommence payload data transfer.

The second channel node 14 receives the channel lock clearing message and changes the configuration of the second transponder 24 in accordance with the modified message encoding parameter (step S22). In some embodiments, the second channel node 14 initiates reconfiguration of the second transponder 24 in accordance with the modified message encoding parameter following the acknowledgment of the modified message encoding parameter by the second channel node 14, e.g. before the first channel node 12 finishes reconfiguration of the message encoding parameter. For example, the second channel node 14 may change the configuration of the second transponder 24 following a received message from the first channel node 12 via the second optical channel indicating the start of the reconfiguration of the first transponder 22 in the first channel node 12 or immediately after receiving the channel lock message. The synchronous reconfiguration of the first and second transponders 22, 24 in the first and second channel nodes 12, 14 may reduce a total time necessary for reconfiguration of the first optical channel with the modified message encoding parameters. However, in some examples, the second channel node 14 waits for the first channel node 12 to finish reconfiguration of the first transponder 22 to limit an impact of reconfiguration failure in the first channel node 12 on data transmission.

In step S24 the second channel node 14 finishes reconfiguration of the second transponder 24 and subsequently disables error suppression in the second transponder 24 or error suppression with respect to errors generated by the second transponder 24. The successful change of the message encoding parameter in the second transponder 24 is further indicated towards the first channel node 12, preferably via the second optical channel, such that payload data transfer can be reinitiated by the first channel node 12.

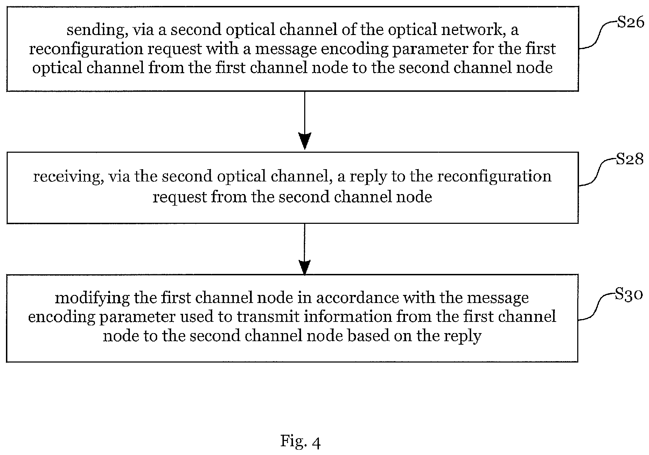

In accordance with the example of the reconfiguration method illustrated in Fig. 3, the first channel node 12 can be configured to perform the method of Fig. 4 illustrating a method to reconfigure a message encoding parameter used by a first channel node 12 to transmit payload data via a first optical channel to a second channel node 14. Following a generation or a reception of a new message encoding parameter by the first channel node 12, the method comprises sending, via a second optical channel of the optical network, a reconfiguration request with a message encoding parameter from the first channel node 12 to the second channel node 14 of the first optical channel (step S26). The method further comprises receiving, via the second optical channel, a reply to the reconfiguration request from the second channel node 14 (step S28). Said reply may indicate a compatibility of the second channel node 14 with the modified message encoding parameter. The method then further comprises modifying the first channel node 12 in accordance with the message encoding parameter used to transmit information from the first channel node 12 to the second channel node 14 based on reply (step S30).

Said modification of the first channel node 12 may modify the minimum amount of attributes in the optical connection to reuse most of the configuration of the first optical channel. In particular, the reconfiguration of the first channel node 12 may be substantially limited to the reconfiguration of the first transponder 22 at the first channel node 12 and associated hardware. Additionally, the method of reconfiguring the first channel node 12 with the new message encoding parameter may avoid switching off an optical beam transmitted by the first optical channel from the first channel node 12 to the second channel node 14, such that transient effects due to a power-dependent optical characteristic of the first optical channel between the first channel node 12 and the second channel 14 is substantially unchanged during the reconfiguration of the first channel node 12. Preferably, no or minimal resynchronization of (intermediate) channel nodes 12, 14, 16a, 16b is triggered due to the reconfiguration of the method encoding parameter of the first optical channel.

An example of such a modified message encoding parameter may be a change of the FEC mode used to add overhead data to data frames for forward error correction at the receiver due to a high optical performance/SNR of the first optical channel, such as a change from EFEC (25% SD FEC) to EFEC (15% SDEFEC-AC100) reducing the amount of bytes used for forward error correction in the data frame thereby increasing the available data rate for the first optical channel.

Equally, the message encoding parameter may be a combination of a modified modulation format and baud rate, such as a change from 4QAM to 8QAM and an associated modification of the baud rate to leave the effective data rate for the client layer of the optical network unaffected. However, the data rate may also be changed by changing any combination of baud rate, modulation format and FEC mode, such as to render the first optical channel compatible with an increased data rate requested by a client layer.

Accordingly, the second channel node 14 may perform a corresponding reconfiguration method for modifying the message encoding parameter used to receive payload data from the first channel node 12.

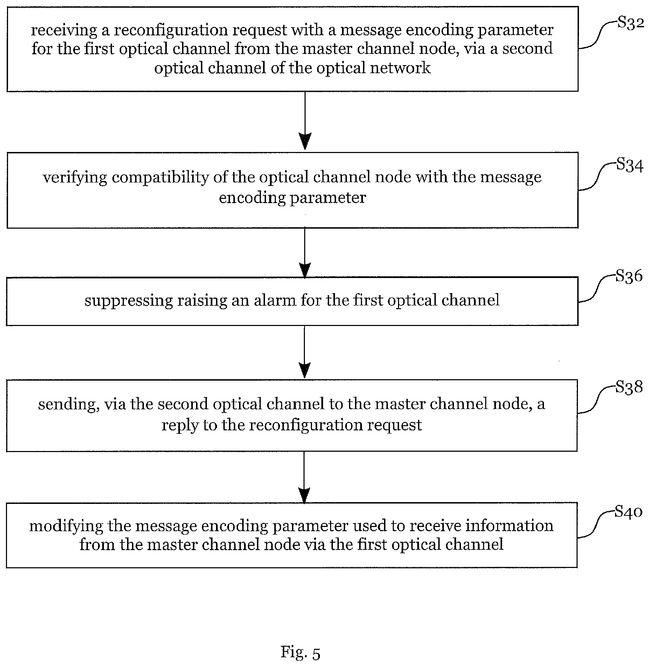

Fig. 5 illustrates a method for reconfiguring the second channel node 14 according to an example. The method comprises receiving a reconfiguration request with a new message encoding parameter for the first optical channel from the master channel node 12, i.e. the first, head-end channel node 12, via a second optical channel of the optical network (step S32). The method further comprises verifying compatibility of the optical channel node 14, i.e. the second channel node 14, with the new message encoding parameter (step S34). If this verification of the compatibility of the second channel 14 with the new message encoding parameter is successful, the second channel node 14 may continue reconfiguration of the message encoding parameter. The method then further comprises suppressing raising alarms for the first optical channel (step S36), such as by suppressing alarms raised by the second transponder 24 used to receive payload data in the second channel node 14 via the first optical channel; and sending, via the second optical channel to the master channel node 12, a positive reply to the reconfiguration request (step S38). Furthermore, the method comprises modifying the message encoding parameter used to receive information from the master channel node 12 (step S40).

In some embodiments, the second channel node 14 may receive a channel lock message transmitted by the first channel node 12 via the second optical channel prior to modifying the message encoding parameter to avoid frame loss before the first channel node 12 starts changing the message encoding parameter. In some embodiments, the second channel node 14 waits for a channel lock clearing message transmitted by the first channel node 12 via the second optical channel indicating successful completion of the reconfiguration of the message encoding parameter in the first channel node 12 prior to modifying the message encoding parameter for receiving information via the first optical channel from the first, master channel node 12. Additionally, instead of raising alarms during suppressing raising alarms, the second channel node 14 may issue an error message to the client layer indicating temporary unavailability of the first optical channel for payload data transfer due to an active reconfiguration of message encoding parameters.

The method of Fig. 5 may also be used to setup message encoding parameters for one or more newly created optical channels between the first and second channel nodes 12, 14 already sharing an optical connection, such as a preconfigured optical channel or an OSC. The preconfigured optical channel or the OSC may then act as the second optical channel for configuring message encoding parameters of one or more newly created first optical channels.

For example, a network management system may indicate a wavelength selective switch configuration to an optical fiber connection 16 and corresponding optical nodes 12, 14, 16a, 16b of the optical network to connect the first and second channel nodes 12, 14 via said one or more newly created first optical channels. The network management system may then designate the first channel node 12 as the master, head-end node for said one or more newly created optical channels and may indicate message encoding parameters for use with said one or more channels. The first channel node 12 may then send, via the second optical channel, i.e. the preconfigured optical channel, an overhead field thereof, or via the OSC connecting the first and the second channel nodes 12, 14, a reconfiguration request with a message encoding parameter for information transfer via said one or more newly created optical channels from the first channel node 12 to the second channel node 14. The first channel node 12 may then receive for at least one newly created optical channel a (positive) reply to the reconfiguration request from the second channel node 14 indicating a compatibility of the second channel node 14 with the message encoding parameters for said at least one newly created optical channel, and may modify a configuration of the first channel node 12, e.g. a configuration of a transponder 22 of the first channel node 12 for transmitting data via said at least one newly created optical channel to the second channel node 14.

Equally, the second channel node 14 may perform initialization of the second transponder 24 for said one or more newly created optical channels after receiving the reconfiguration request from the first channel node 12 via the second optical channel with the new message encoding parameter in accordance with the method illustrated in Fig. 5 by verifying compatibility of the second channel node 14 with the message according parameters received for each of the one or more newly created optical channels and acknowledging the reconfiguration request based on the verification of the compatibility with the message encoding parameters. However, the skilled person will appreciate that for an initialization of said one or more newly created optical channels, a suppression of errors may not be required. Additionally, the second channel node 14 may immediately commence configuring an associated second transponder 24 for receiving payload data via said one or more newly created optical channels before the first channel node 12 finishes reconfiguration of the message encoding parameters for transferring payload data via said one or more newly created optical channels.

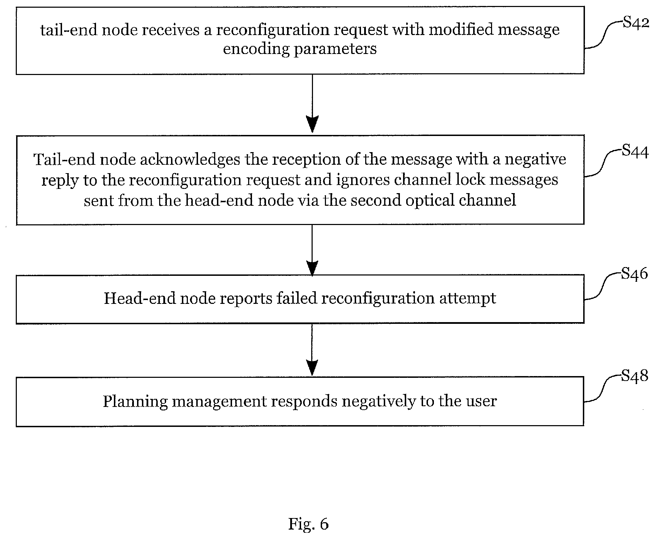

Fig. 6 illustrates a method, wherein the second, tail-end channel node 14 receives a reconfiguration request with at least one modified message encoding parameter (step S42), but may be at least partially or temporarily not compatible with said reconfiguration request. The second channel node 14 then acknowledges the reception of the reconfiguration requests with a negative reply to the first channel node 12 and ignores a channel lock message sent from the first channel node 12 via the second optical channel (step S44). The first channel node 12 receives the negative reply via the second optical channel and reports the failed reconfiguration attempt (step S46). The network management system then responds negatively to the user having requested the change of message encoding parameters (step S48), and the previous message encoding parameters are maintained.

The preceding examples have mostly focused on message encoding for payload data transfer from the first channel node 12 to the second channel node 14 via the first optical channel. However, message encoding for data transfer in the reverse direction from the second channel node 14 to the first channel node 12 via the first optical channel, i.e. a corresponding unidirectional optical connection providing a reverse service for the first optical channel, may equally be reconfigured during the method.

For example, the first channel node 12 may simultaneously change a message encoding parameter of the first channel node 12 for receiving payload data from the second channel node 14 via the first optical channel when modifying the message encoding parameter for sending data from the first channel node 12 to the second channel node 14. Similarly, the second channel node 14 may simultaneously modify a message encoding parameter for sending payload data from the second channel node 14 to the first channel node 12 via the first optical channel when modifying the second channel node 14 in accordance with the new message encoding parameter for receiving payload data from the first channel 12 via the first optical channel.

However in some embodiments, the reverse connection via the first optical channel is not reconfigured according to the modified message encoding parameters or is independently, and in particular only subsequently, reconfigured after a reconfiguration of the message encoding parameter for transferring payload data from the first channel node 12 to the second channel node 14 via the first optical channel has been successfully completed in both nodes 12, 14.

In some embodiments, a bilateral simultaneous message encoding parameter reconfiguration is performed in both nodes, wherein a transponder 22 of both the first channel node 12 and the second channel node 14 is modified according to the message encoding parameters to send information to the respective tail-end node of the corresponding optical connection of the first optical channel after the reconfiguration request has been acknowledged by the second channel node 14. When successful completion of one or both transponder reconfigurations of the first and second channel node 12, 14 have been indicated to the other channel node, a corresponding receiver reconfiguration of the second and first channel node 14, 12 according to the modified message encoding parameter is performed, respectively, to receive payload data transmitted via the first optical channel according to the modified message encoding parameter in one or both directions.

The description of the preferred embodiments and the figures merely serve to illustrate the invention and the beneficial effects associated therewith, but should not be understood to imply any limitation. The scope of the invention is to be determined solely by the appended claims.

### LIST OF REFERENCE SIGNS

- 10: system
- 12: first channel node
- 14: second channel node
- 16: optical fiber connection
- 16a: first optical fiber
- 16b: second optical fiber
- 18a, 18b: intermediate optical channel nodes
- 20: intermediate transport section
- 22: first transponder
- 24: second transponder
- 26a: preamplifier of the first channel node
- 26b: preamplifier of the second channel node
- 28a: first multiplexing section of the first channel node
- 28b: first multiplexing section of the second channel node
- 30a: second multiplexing section of the first channel node
- 30b: second multiplexing section of the second channel node
- 32a: post-amplifier of the first channel node
- 32b: post-amplifier of the second channel node
- λₚ: wavelength of the first optical channel
- λ_{...+p}: optical beam including added first optical channel
- λ_{...-p}: optical beam from which first optical channel has been dropped
- B1: input beam
- B2: output beam

## Claims

1. A method for reconfiguring a message encoding parameter used by a first channel node (12) to transmit information to a second channel node (14) via a first optical channel in an optical network, the method comprising the steps of:
- sending, via a second optical channel of the optical network, a reconfiguration request with a message encoding parameter for the first optical channel from the first channel node (12) to the second channel node (14);
- receiving, via the second optical channel, a reply to the reconfiguration request from the second channel node (14); and
- modifying the first channel node (12) in accordance with the message encoding parameter used to transmit information from the first channel node (12) to the second channel node (14) via the first optical channel based on the reply.

2. The method of claim 1, wherein the message encoding parameter comprises at least one of a data rate, an FEC mode, a modulation mode and a baud rate.

3. The method of any one of the preceding claims, wherein the information is transmitted from the first channel node (12) to the second channel node (14) through at least one additional node (16a, 16b) along the optical network, and/or wherein the optical network employs wavelength multiplexing.

4. The method of any one of the preceding claims, wherein the second optical channel is an optical supervisory channel of the optical network, or wherein the second optical channel is implemented in an overhead data field of an optical channel using an independent message encoding scheme from the first optical channel, in particular in an overhead field reserved for operator use.

5. The method of any one of the preceding claims, wherein the method further comprises the steps of:
- sending, via the second optical channel, an error suppression message instructing the second channel node (14) to suppress errors from packet loss during a subsequent change of the message encoding parameter, and
- sending a transmitter reconfiguration completion message to the second channel node (14) when the message encoding parameter has been successfully changed; and/or wherein the method further comprised the steps of:
- receiving, via the second optical channel, a receiver reconfiguration completion message from the second channel node (14), and
- reinitiating payload transfer via the first optical channel.

6. The method of any one of the preceding claims, wherein the first channel node (12) is selected as a master of the first optical channel between the first channel node (12) and the second channel node (14) based on an unambiguous rule, said unambiguous rule preferably depending on the identifiers of the first channel node (12) and second channel node (14) in the optical network.

7. The method of any one of the preceding claims,
- further comprising verifying compatibility of the first channel node (12) with the message encoding parameter after receiving the message encoding parameter and before sending the reconfiguration request; and/or
wherein the reconfiguration request comprises a set of supported parameter values for the message encoding parameter, said supported parameter values corresponding to parameter values for the message encoding parameter which are supported by the first channel node (12), wherein the method in particular further comprises receiving a selected parameter value from the second channel node (14), wherein the selected parameter value is a parameter value of the set of supported parameter values, and preferably further comprises modifying the first channel node (12) in accordance with the selected parameter value.

8. A method for reconfiguring a message encoding parameter used by an optical channel node (14) to transmit information to a master channel node (12) via a first optical channel in an optical network, the method comprising the steps of:
- receiving a reconfiguration request with a message encoding parameter for the first optical channel from the master channel node (12), via a second optical channel of the optical network;
- verifying compatibility of the optical channel node (14) with the message encoding parameter;
- suppressing raising an alarm for the first optical channel;
- sending, via the second optical channel to the master channel node (12), a reply to the reconfiguration request; and
- modifying the message encoding parameter used to receive information from the master channel node (12) via the first optical channel.

9. The method of claim 8, wherein the reconfiguration request comprises a set of supported parameter values for the message encoding parameter and the method further comprises selecting a suitable parameter value from the set of supported parameter values as a selected parameter value, in particular according to an order of the supported parameter values in the set of supported parameter values, wherein the suitable parameter value is supported by the optical channel node (14), and wherein the method preferably further comprises sending the selected parameter value to the master channel node (12), in particular with the reply to the reconfiguration request.

10. An optical channel node (12) of an optical network configured to transmit information to a second channel node (14) via a first optical channel in the optical network, the optical channel node (12) being configured to:
- send, via a second optical channel of the optical network, a reconfiguration request with a message encoding parameter for the first optical channel to the second channel node (14) of the first optical channel;
- receive, via the second optical channel, a reply to the reconfiguration request from the second channel node (14); and
- modify the configuration of the optical channel node (12) in accordance with the message encoding parameter used to transmit information from the optical channel node (12) to the second channel node (14) via the first optical channel based on the reply.

11. The optical channel node (12) of claim 10, further comprising:
- a transponder for modulating an optical beam of the first optical channel with the message encoding parameter to transmit information from the optical channel node (12) to the second channel node (14), and
- a switch to receive the optical beam from the transponder and direct the optical beam into an optical fiber for the first optical channel,
wherein the control unit is configured to modify the transponder according to the message encoding parameter.

12. The optical channel node (12) of claim 11, wherein the optical beam remains switched on while the control unit changes the encoding parameter at the transponder.

13. An optical channel node (14) of an optical network configured to receive information from a master channel node (12) via a first optical channel in the optical network, the optical channel node (14) being configured to:
- receive a reconfiguration request with a message encoding parameter for the first optical channel from the master channel node (12), via a second optical channel of the optical network;
- verify compatibility of the optical channel node (14) with the message encoding parameter;
- suppress raising an alarm for the first optical channel;
- send, via the second optical channel to the master channel node (12), a reply to the reconfiguration request; and
- modify the message encoding parameter used to receive information from the master channel node (12) via the first optical channel.

14. The optical channel node (14) of claim 13, wherein the control unit is configured to modify the message encoding parameter used to receive information from the master channel node (12) after receiving an error suppression clearing message via the second optical channel.

15. An optical channel node (12, 14) or system of channel nodes configured to implement the functionality of the optical channel node (12) according to any one of claims 10-12 and the functionality of the optical channel node (14) according to claims 13 or 14.
